# EUROPEAN PATENT APPLICATION

(11) **EP 0 529 941 A1**
(43) Date of publication of application: **03.03.1993**
(21) Application number: 92307608.7
(22) Date of filing: 20.08.1992
(51) Int. Cl.: B60N 2/28, A47C 27/12

(54) **Safety seat**

(30) Priority: 29.08.1991 FI 914076
(71) Applicant: Harju, Monica, SF-62420 Kortesjarvi (FI)
(72) Inventor: Asikainen, Kari, SF-02140 Espoo (FI); Jarvinen, Jyrki, SF-65230 Vaasa (FI); Levanto, Antti-Pekka, SF-65100 Vaasa (FI); Lahtinen, Sami Taideteollinen korkeakoulu, SF-00560 Helsinki (FI)
(74) Representative: Barlow, Roy James

(57) **Abstract**

The present invention relates to a shock absorbing safety seat, comprising a rigid body (1) and, disposed thereagainst, an elastically compressible layer (2) of shock absorbing cellular plastic. The shock absorbing layer (2) consists of a plurality of loose cellular plastic particles (3) in a bag (4) made from an elastic material.

## Description

The present invention relates to a safety seat, such as infants' safety seat or equivalent. The present invention relates particularly to a safety seat which is provided with a rigid body and an elastically compressible layer arranged to lie thereagainst, being made from shock absorbing cellular plastic.

In the infants' safety seats and equivalent, the side of the rigid body which is intended to lie against the head and the body has in general been coated with a shock absorbing, solid cellular plastic layer which has usually been manufactured by means of casting in one piece. A drawback of such uniform cast cellular plastic layer is that the shape thereof has been predetermined, and will not, therefore, conform to the outline of the head and the body. Thus, the strain caused by a shock is not uniformly directed at the head and the body of the user, in addition to which the safety seat may be uncomfortable in use.

A safety seat made by casting from this kind of uniform cellular plastic layer becomes uncomfortable in use also because a uniform cellular plastic layer is not breathing although perforations can be made therein in order to enhance the ventilation.

The object of the present invention is therefore to provide a safety seat in which the above drawbacks have been eliminated without sacrificing the shock absorbing properties of the safety seat.

In a safety seat according to the present invention, the shock absorbing, uniform cellular plastic layer made by casting has been replaced by a plurality of loose particles of cellular plastic placed in a bag made from an elastic material. In this manner a shock absorbing cellular plastic layer has been provided, which in use conforms to the shape of the head and the body of the user and which is also soft and pleasant in use. A shock directed at the safety seat is thereby also distributed uniformly at the user's head or body, which furthermore reduces the risk of being injured.

A bag containing loose cellular plastic particles has advantageously been divided in a number of successive and/or adjacent segments, compartments or sections in order to ensure that the particles fill effectively the space between the body of the seat and the user.

Cellular plastic particles of at least two distinctly different sizes have preferably been provided which have been divided uniformly in the whole bag. By means of an appropriate selection of particle size and size distribution, the shock absorption and comfort properties of the hsock absorbing layer can be affected, when a desired quantity of air is entrapped between the particles in the bag, being dependent on what size of particles are mixed.

The cellular plastic particles are preferred to be spherical, whereby they are easily able to move about relative to each other. Preferably, cellular plastic particles of at least two distinctly differing sizes are used, these being distributed evenly in the entire bag so that a greater amount of minor particles rather than larger particles are used.

The cellular plastic particles may be of a shock well absorbing cellular plastic such as expanded polystyrene.

At least the side of the bag which is opposite to the rigid body preferably at least partly consists of a breathing layer in order to enhance the comfort of the safety seat in use as air is made to flow into and out of the bags, in addition to which the bags are breathing, due to the air moving between the particles, which substantially reduces the discomfort caused by moisture accumulation.

The invention is described in greater detail referring to the accompanying drawing, wherein,-
Figure 1 presents a cross-sectional parallel view of an infants' safety seat, and
Figure 2 shows similarly a partial sectional view A of Fig. 1 on enlarged scale.

In order to increase the safety of those travelling in various vehicles, safety belts, air cushions and various neck supports are used. Especially for children are produced seats of small size, which in many cases are provided with safety seats of their own. The infants' seats are usually made from plastic, cellular plastic or from a combination thereof. The primary function of the infants' seats known in the art is, on one hand, to fix a child to the car seats proper and, on the other, with belts of its own to the children's seat. In the safety tests of an infant seat, the strengths of the seat structure, the body, the belts and the junctures are studied. On the other hand, accelerations caused by a collision are studied. Acceleration is in general measured so that the seat is transported with the face of a test doll towards the travelling direction and it is stopped with rubber springs in a voyage of under 300 mm, whereby the doll advances to be supported by the belts. The maximum acceleration is obtained after the belts have stretched to the extreme lengths thereof. It has been found in the tests that the doll will thereafter bounce back against the seat. There may be several back and forth movements between the seat and the belts, depending on the elasticity and the attenuation ability of the constructions.

No particular endeavours have been made in the segats known in the art to attenuate the movements after the first shock. The seats for the smallest infants have usually been placed with the back to the travelling direction. In this case the shock absorption of the seat construction in a primary collision becomes more significant than in the testing method described above.

It has been found in the tests that after the first shock the child will not every time touch the centre part of the seat when moving about. In many cases the head swings against the sides of the seat.

The expanded polystyrene (EPS) frequently used in the infant seats of prior art absorbs shocks quite well. When EPS is however at the same time used for reinforcing the substantial structure of the entire seat, such EPS quality has to be selected which is disadvantageously hard (kg/m³) considering the shock absorption ability.

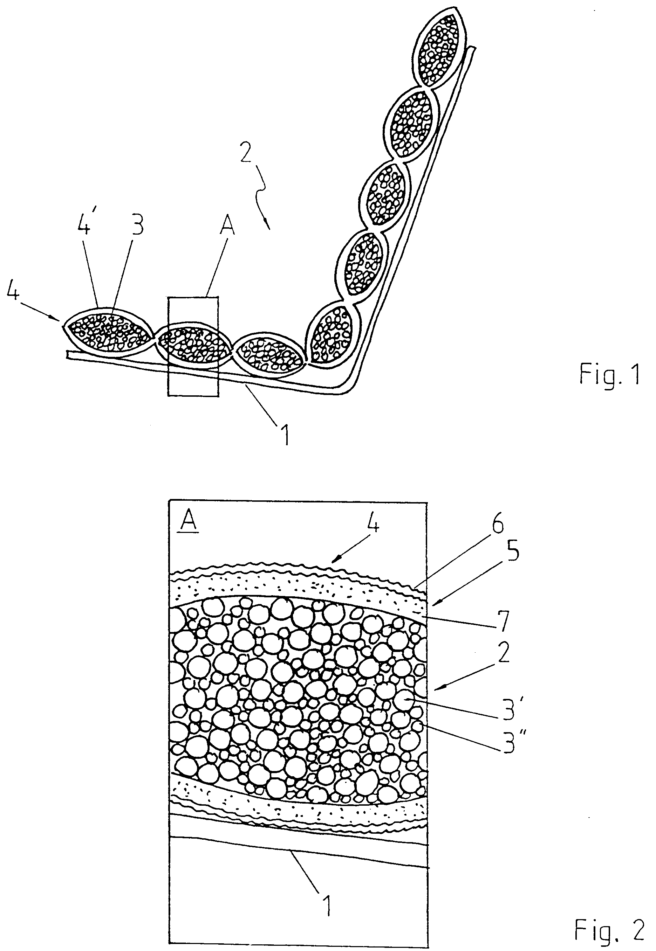

The infants' safety seat presented in Figure 1 consists of a body 1 reinforced by means of arcuate shape, whereto the attaching belts (not shown) are affixed and against which an elastically compressible layer 2 made of shock absorbing cellular plastic has been positioned. The shock absorbing layer 2 comprises, as taught by the invention, a plurality of loose cellular plastic particles 3 placed in a bag 4 made of an elastic material. As regards the volume of the bag, the size and number of the particles 3 have been so chosen that a desired shock absorbing degree is obtained.

It has been found in the tests that the particles 3 are preferably placed in compartments, sections or segments 4′, which can be made by methods used in textile industry. This ensures that the particles 3 fill appropriately the space between the seat body 1 and the infant sitting thereon. The mobility of the particles 3 within the segments 4′ causes that the particles 3 form a surface conforming to the shape of the child while he/she is being pressed against the seat. This results in good seat comfort and, on the other hand, in a smaller pressure per surface area.

By means of the design of the invention, the good shock absorbing ability of the EPS plastic is made use of, while eliminating the safety risk caused by the hardness of the EPS body seats known in the art. In addition, an excellent sitting comfort is obtained. Furthermore, the bags filled with EPS particles are breathing due to the air flowing between the spheres, which essentially reduces the discomfort caused by the moisture gathered therein.

With the design of the invention bags or bags segments filled in different ways may be positioned as desired in different parts of the seat to serve the use, so that, for instance, in the head region a different shock absorption is obtained in comparison with that in the hip area.

The shape of the particles 3 is selected to be preferably spherical, as seen in Figure 2 more in detail. The spherical particles may move more easily with one another and so conforming better to the shape of the one sitting thereon.

The shock absorbing and sitting comfort properties of the layer 2 may furthermore be affected, as desired, by using EPS spherelets 3′ and 3˝ of different sizes. A desired amount of air is entrapped between the spherelets 3′ and 3˝ depending on what size of spheres have to be mixed. The size of the spherelets varies from two to five millimetres, and there are preferably at least two distinctly different sizes, whereby more of smaller spherelets 3 are preferably used than larger spherelets 3′.

At least the layer 5 of the bag 4, being against the sitting person, is advantageously made of a breathing material, and it may be, as seen in Figure 2, composed of surface envelope 6, e.g. of cloth or other breathing material, and of an open-cell foam layer 7 placed thereinside. The reinforcing layer 1 can be made of plastic, metal or other appropriate strong material.

### Example

The safety seat of the present invention was compared with a conventional shock absorbing safety seat in which a uniform, cast EPS plastic layer of thickness of two centimetres had been attached to a rigid body.

When a calibrated shock of a given strength was directed at the body of said safety seat known in the art, it was found that a shock of 3200 Newtons was transmitted through the uniform, cast EPS plastic layer. When the uniform, cast EPS plastic layer was replaced by a cloth bag of equal thickness and filled with EPS plastic spherelets, it was found that a shock of only 2300 Newtons was transmitted through the shock absorbing layer, i.e. the shock absorbing effect of the cloth bag filled with EPS plastic spherelets was substantially greater than by using a uniform EPS plastic layer made by casting.

By means of the design of the invention, not only a better shock absorption is gained but the shock is also distributed more evenly since the shock absorbing bag according to the invention, being filled with cellular plastic particles, conforms to the shape of the body and the head of the user, which is not occurring with a uniform shock absorbing layer made by casting. In addition, the shock absorbing safety seat according to the invention is substantially more pleasant in use because of the breathing construction. In addition, the shock absorbing safety seat of the invention is less costly to make and it is more appropriate for different purposes than a uniform shock absorbing layer made by casting, in which the size and shape have been predetermined.

## Claims

1. A safety seat, comprising a rigid body (1) and a compressible layer (2) fitted elastically thereagainst, being made of shock absorbing cellular plastic, characterized in that the shock absorbing layer (2) is composed of a plurality of loose cellular plastic particles (3) placed in a bag (4) made of an elastic material.

2. A safety seat according to claim 1, characterized in that the bag (4) has been divided into several successive/adjacent segments (4′).

3. Safety seat according to claim 1 or 2, characterized in that the cellular plastic particles (3) are spherical (3′, 3˝).

4. Safety seat according to claim 1, 2 or 3, characterized in that there are at least two distinctly different sizes of cellular plastic particles (3) uniformly distributed in the entire bag volume (4).

5. Safety seat according to claim 4, characterized in that there is a considerably greater amount of smaller particles (3˝) than of larger particles (3′).

6. Safety seat according to any one of the preceding claims, characterized in that the cellular plastic particles (3) are made of shocks well absorbing expanded polystyrene.

7. Safety seat according to any one of the preceding claims, characterized in that at least the side of the bag (4) which is opposite to the rigid body is made of at least partly breathing material layer (5).
